# EUROPEAN PATENT APPLICATION

(11) **EP 4 813 735 A2**
(43) Date of publication of application: **30.09.2026**
(21) Application number: 26161699.9
(22) Date of filing: 02.03.2026
(51) Int. Cl.: B60L 58/12, B60L 58/14

(54) **CONTROL METHOD, CONTROL PROGRAM, AND CONTROL DEVICE FOR CONTROLLING AN ELECTRIC WORK VEHICLE WITH ELECTRICALLY DRIVEN WORK MACHINE**

(30) Priority: 27.03.2025 JP 2025053011
(71) Applicant: Yanmar Holdings Co., Ltd., Osaka (JP)
(72) Inventor: KODAMA, Maroi, Okayama (JP); SUZUKI, Shogo, Okayama (JP); ISHIDA, Tomoki, Okayama (JP)
(74) Representative: Isarpatent

(57) **Abstract**

[Problem] Provided are a control method, a control program, and a control device capable of preventing occurrence of charge run-out in a work vehicle driven by electric power supplied from a power supply source.

[Solution] A control device 113 includes: a travel processing unit 113d that causes a work vehicle 10 to travel by electric power charged in a battery 111e; and a work processing unit 113e that drives a work machine 12, provided in the work vehicle 10, by the electric power charged in the battery 111e, and stops the driving of the work machine 12 when the remaining charge of the battery 111e becomes less than a first threshold.

## Description

### TECHNICAL FIELD

The present invention relates to a technique for driving a work vehicle by electric power supplied from a power supply source.

### BACKGROUND ART

Conventionally, there is known a technique of prompting a user to refill fuel when the amount of fuel becomes less than a predetermined amount in a work vehicle (for example, a tractor) driven by fuel (for example, see Patent Document 1).

### PRIOR ART DOCUMENT

### PATENT DOCUMENT

Patent Document 1: JP-A-2016-125395

### SUMMARY OF INVENTION

### TECHNICAL PROBLEM

In the work vehicle driven by fuel, for example, even when the fuel runs out during work and the work stops, the user can immediately restart the work by going to a place of the work vehicle and supplying the fuel. On the other hand, in a work vehicle driven by electric power charged in a power supply source such as a battery, for example, when work is stopped due to charge run-out during the work, a user cannot cause the work vehicle to travel to a predetermined charging place, and needs to prepare charging equipment (such as a generator and a charging cable), so that a work load is large, and there occurs a problem that work efficiency deteriorates because it is impossible to immediately go to a place of the work vehicle and start charging.

An object of the present invention is to provide a control method, a control program, and a control device capable of preventing occurrence of charge run-out in a work vehicle driven by electric power supplied from a power supply source.

### SOLUTIONS TO PROBLEM

A control method according to the present invention is a control method for driving a work vehicle by electric power supplied from a power supply source. The control method includes: causing the work vehicle to travel by the electric power charged in the power supply source; driving a work machine provided in the work vehicle by the electric power charged in the power supply source; and stopping the driving of the work machine when a remaining charge of the power supply source becomes less than a first threshold.

A control program according to the present invention is a control program for driving a work vehicle by electric power supplied from a power supply source. The control program is a control program for causing one or a plurality of processors to execute: causing the work vehicle to travel by the electric power charged in the power supply source; driving a work machine provided in the work vehicle by the electric power charged in the power supply source; and stopping the driving of the work machine when a remaining charge of the power supply source becomes less than a first threshold.

A control device according to the present invention is a control device that drives a work vehicle by electric power supplied from a power supply source. The control device includes: a travel processing unit that causes the work vehicle to travel by the electric power charged in the power supply source; and a work processing unit that drives a work machine, provided in the work vehicle, by the electric power charged in the power supply source, and stops the driving of the work machine when a remaining charge of the power supply source becomes less than a first threshold.

### ADVANTAGEOUS EFFECTS OF INVENTION

According to the present invention, it is possible to provide the control method, the control program, and the control device capable of preventing the occurrence of the charge run-out in the work vehicle driven by the electric power supplied from the power supply source.

### BRIEF DESCRIPTION OF DRAWINGS

Fig. 1 is a block diagram illustrating a configuration of an automatic traveling system according to an embodiment of the present invention;
Fig. 2 is an external view illustrating a configuration of a work vehicle according to the embodiment of the present invention;
Fig. 3 is a block diagram illustrating a configuration of the work vehicle according to the embodiment of the present invention;
Fig. 4 is a view illustrating an example of a method for generating an automatic traveling route according to the embodiment of the present invention;
Fig. 5 is a view illustrating a movement route to a charging place according to the embodiment of the present invention;
Fig. 6 is a flowchart illustrating an example of a procedure of travel processing executed by the automatic traveling system according to the embodiment of the present invention; and
Fig. 7 is a view illustrating another example of the automatic traveling route according to the embodiment of the present invention.

### DESCRIPTION OF EMBODIMENTS

The following embodiments are embodied examples of the present invention and do not limit the technical scope of the present invention.

### [Schematic configuration of automatic traveling system]

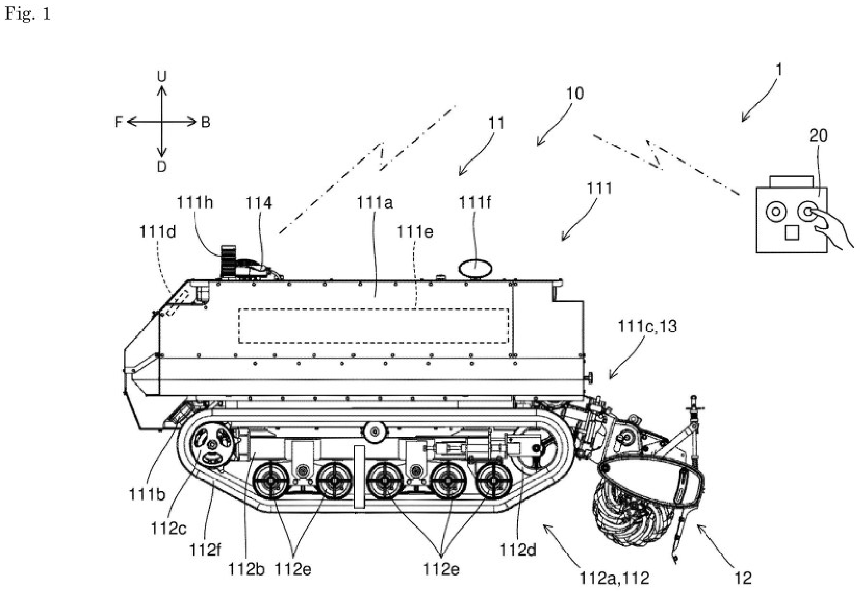

Fig. 1 is a view illustrating a schematic configuration of an automatic traveling system 1 according to an embodiment of the present invention. The automatic traveling system 1 includes a work vehicle 10 and an operation device 20.

The operation device 20 (also referred to as a pilot device or an operation remote controller) is a remote operation tool that enables an operator (user) located away from the work vehicle 10 to operate the work vehicle 10. The operation device 20 enables a setting related to manual traveling of the work vehicle 10 and a setting related to automatic traveling of the work vehicle 10. A configuration of the operation device 20 will be described later.

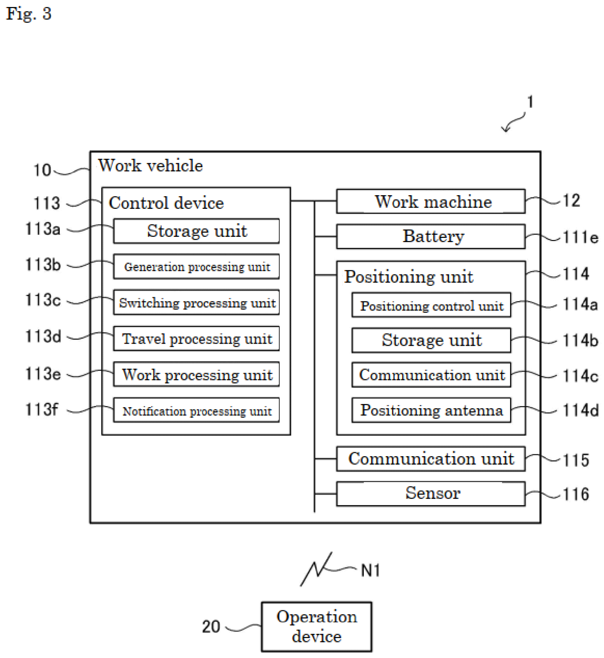

In the present embodiment, automatic traveling (also referred to as autonomous traveling) means that at least steering is autonomously performed as devices related to traveling are controlled by a control device 113 (see Fig. 3), described later, included in the work vehicle 10. The automatic traveling may be configured, for example, such that at least one of adjustment of vehicle speed and work by a work machine 12, described later, is autonomously performed in addition to steering.

Note that the operation device 20 is provided separately from the work vehicle 10 in the present embodiment, but the present invention is not limited to this configuration. For example, the operation device 20 may be provided in the work vehicle 10 itself.

The work vehicle 10 is used to conduct work such as farm work or construction work. The work vehicle 10 includes a traveling machine body 11 that travels on the ground, and the work machine 12 that is coupled to the traveling machine body 11.

Here, directions used in the description (particularly, directions related to the work vehicle 10) are defined as follows. A direction in which the traveling machine body 11 and the work machine 12 are arranged is defined as a front-rear direction, a direction in which the work machine 12 is located as viewed from the traveling machine body 11 is defined as a "rear direction", and its opposite direction is defined as a "front direction". Furthermore, in a direction from the rear to the front, a left side is referred to as a "left direction", and a right side is referred to as a "right direction". Further, a gravity direction perpendicular to the front-rear direction and the left-right direction is defined as an up-down direction, an upstream side in the gravity direction is defined as an "up direction", and a downstream side is defined as a "down direction". In the drawings, as necessary, the front is denoted by "F", the rear is denoted by "B", the right is denoted by "R", the left is denoted by "L", the upper side is denoted by "U", and the lower side is denoted by "D".

In the present embodiment, the work machine 12 is disposed at the rear of the traveling machine body 11, but the present invention is not limited to this configuration, and the work machine 12 may be disposed at the front of the traveling machine body 11.

The traveling machine body 11 includes a machine main body 111, and a traveling unit 112 that is disposed on the lower side of the machine main body 111.

The machine main body 111 includes an outer cover 111a, a traveling driving device 111b that is disposed on an inner front side covered with the outer cover 111a, and a work machine driving device 111c that is disposed on an inner rear side covered with the outer cover 111a.

The traveling driving device 111b includes a driving source, and a traveling power transmission unit that transmits power from the driving source to the traveling unit 112. In the present embodiment, the driving source included in the traveling driving device 111b is an electric motor.

The work machine driving device 111c includes a driving source, and a power take off (PTO) power transmission unit that transmits power from the driving source to the outside of the traveling machine body 11. In the present embodiment, the driving source included in the work machine driving device 111c is an electric motor. The electric motor included in the traveling driving device 111b and the electric motor included in the work machine driving device 111c may be common or different.

In addition, an in-vehicle setting unit 111d that enables the setting related to the automatic traveling of the work vehicle 10, a battery 111e (power supply source) that supplies electric power to the electric motor, a power electronics device (not illustrated), and the like are disposed inside the outer cover 111a.

The in-vehicle setting unit 111d is disposed on the inner front side covered with the outer cover 111a and includes a display unit (for example, a touch panel). The in-vehicle setting unit 111d enables the setting related to the automatic traveling of the work vehicle 10 and displays various types of information of the work vehicle 10. Note that a display unit different from the in-vehicle setting unit 111d may be provided in the work vehicle 10 in order to display various types of information of the work vehicle 10.

The battery 111e is disposed on the inner side covered with the outer cover 111a, and is configured by, for example, a lithium ion battery. The battery 111e may be configured by unitizing a plurality of battery cells, or may be configured by a single battery cell.

The battery 111e stores electric power for driving the electric motor. That is, the electric power stored in the battery 111e is supplied to the electric motor. That is, the electric power of the battery 111e is used for traveling of the work vehicle 10 (driving of the traveling driving device 111b) and work by the work machine 12 (driving of the work machine driving device 111c). Furthermore, the electric power stored in the battery 111e may also be supplied to the outside of the work vehicle 10. Note that the electric power is supplied to the outside of the work vehicle 10 as a step-down inverter (not illustrated) included in the power electronics device described above steps down an AC voltage of a high voltage (for example, 300 V) supplied from the battery 111e to a low voltage (for example, 100 V).

As an example, a light 111f, a positioning unit 114, a warning light 111h, and the like are disposed outside the outer cover 111a.

The traveling unit 112 supports the machine main body 111 in a travelable manner. The traveling unit 112 includes a pair of left and right crawlers 112a. Each of the left and right crawlers 112a includes a track frame 112b that extends in the front-rear direction. Each of the track frames 112b is attached to a lower face of the machine main body 111. At a front end of the track frame 112b, a driving sprocket 112c is disposed as a driving wheel. Power from the electric motor is transmitted to the driving sprocket 112c via the traveling power transmission unit included in the traveling driving device 111b. At a rear end of the track frame 112b, a driven sprocket 112d is disposed as a driven wheel. The driven sprocket 112d is rotatably supported by the track frame 112b. In the track frame 112b, a plurality of track rollers 112e are rotatably supported between the driving sprocket 112c and the driven sprocket 112d. A crawler belt 112f is wound around the driving sprocket 112c, the driven sprocket 112d, and the plurality of track rollers 112e to form the crawler 112a.

The respective left and right crawlers 112a are driven by separate electric motors included in the traveling driving device 111b. When the pair of left and right crawlers 112a are simultaneously driven in the same direction, the traveling unit 112 travels straight to the front or the rear. Either the front or the rear is determined according to a rotation direction of the electric motors. The traveling unit 112 performs left turning or right turning, for example, by independently driving the pair of left and right crawlers 112a.

In the present embodiment, the crawler 112a has a configuration in which one driving wheel (the driving sprocket 112c) and one driven wheel (the driven sprocket 112d) are arranged in the front-rear direction and the crawler belt 112f is wound therearound, but the crawler 112a may have another configuration. For example, the crawler may be of a type in which a crawler belt is wound around one driving wheel and two driven wheels in a triangular shape. Furthermore, the traveling unit 112 is of a crawler type in the present embodiment, but the traveling unit 112 may be of a type other than the crawler type, and may be of a wheel type, for example.

The work machine 12 is attached to the traveling machine body 11 to be able to be elevated or lowered, by using a hitch 13. Note that the hitch 13 includes the work machine driving device 111c. Furthermore, the work machine 12 is attached to the hitch 13 in a replaceable manner. That is, the work machine 12 can be replaced with various types of work machines. In Fig. 1, the work machine 12 is a rotary tilling device. The work machine 12 may be, for example, a plow, a ridging device, a fertilizing device, a spraying device (agrochemical spraying device), a harvesting device, a mowing device (grass cutting device), a snow removing device, or the like, in addition to the rotary tilling device.

A configuration of the work vehicle 10 included in the automatic traveling system 1 is not limited to the configuration described above. The work vehicle 10 only needs to have a configuration including the traveling machine body 11 capable of automatic traveling, and may be, for example, an agricultural machine such as a tractor or a combine, or a construction machine such as an excavator or a bulldozer. In the present embodiment, a driver's seat for the operator is not disposed in the work vehicle 10, and the work vehicle 10 performs traveling while working in an unmanned manner. However, the present invention is also applicable to a work vehicle obtained by providing a driver's seat in the work vehicle 10. That is, the work vehicle 10 may include an instrument (a steering wheel, a lever, and the like) for the operator seated on the driver's seat to steer the work vehicle 10.

### [Configuration of operation device]

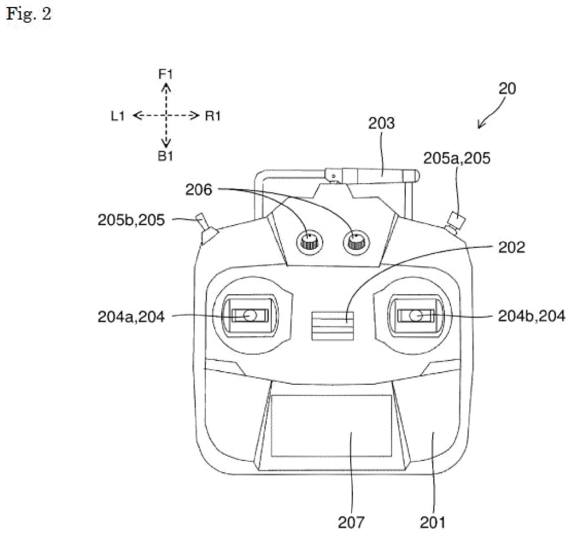

The configuration of the operation device 20 will be described with reference to Fig. 2. Fig. 2 is a plan view illustrating the configuration of the operation device 20. The operation device 20 includes a housing 201, a power switch 202, an antenna 203, an operation lever 204, an operation switch 205, an operation knob 206, and a display unit 207.

The housing 201 constitutes a main body portion of the operation device 20. The power switch 202, the antenna 203, the operation lever 204, the operation switch 205, the operation knob 206, and the display unit 207 are attached to appropriate positions of the housing 201. Note that the disposition illustrated in Fig. 2 is merely an example, and may be appropriately changed.

The power switch 202 is provided at the center of a front face of the housing 201, and enables on/off of the power of the operation device 20. The power switch 202 is, for example, a seesaw switch. Note that a power source of the operation device 20 is, for example, a battery, a dry cell, or the like that is disposed in the housing 201.

The antenna 203 is provided to protrude from a side face (an upper side face in Fig. 2) of the housing 201, and enables wireless communication with the work vehicle 10. In a case where the power switch 202 has brought the operation device 20 into a power-on state, the operation device 20 can perform wireless communication with the work vehicle 10. In a case where the power switch 202 has brought the operation device 20 into a power-off state, the operation device 20 fails to communicate with the work vehicle 10. In the present embodiment, when it is not possible to communicate with the operation device 20, the work vehicle 10 automatically stops traveling. That is, the power switch 202 has a function as an emergency stop switch of the work vehicle 10. Note that the emergency stop switch may be provided separately from the power switch 202.

The operation lever 204 enables a traveling operation to be performed on the work vehicle 10 (the traveling machine body 11), and enables an operation to be performed on the work machine 12. The operation lever 204 includes a first operation lever 204a and a second operation lever 204b disposed side by side with the power switch 202 interposed therebetween. The first operation lever 204a (a left side lever illustrated in Fig. 2) can be tilted at least in two directions (a direction F1-B1 and a direction L1-R1) that are illustrated as broken line arrows in Fig. 2 and are orthogonal to each other. Furthermore, the first operation lever 204a can be tilted to any one side in the direction L1-R1 while being tilted to any one side in the direction F1-B1. Note that the second operation lever 204b (a right side lever illustrated in Fig. 2) can also be tilted in directions similar to those of the first operation lever 204a.

When the first operation lever 204a is tilted in the direction F1, the work vehicle 10 can be moved forward. When the first operation lever 204a is tilted in the direction B1, the work vehicle 10 can be moved backward. When the first operation lever 204a is tilted in the direction L1, the work vehicle 10 can be turned to the left. When the first operation lever 204a is tilted in the direction R1, the work vehicle 10 can be turned to the right.

When the second operation lever 204b is tilted in the direction F1, the work machine 12 can be elevated. When the second operation lever 204b is tilted in the direction B1, the work machine 12 can be lowered. When the second operation lever 204b is tilted in the direction L1, the work vehicle 10 can be turned to the left. When the second operation lever 204b is tilted in the direction R1, the work vehicle 10 can be turned to the right.

Note that a turning radius (turning amount) at the time of being operated with the same operation amount (amount of operation from a neutral position) is different between turning (left turning or right turning) by the first operation lever 204a and turning (left turning or right turning) by the second operation lever 204b. More specifically, when the first operation lever 204a and the second operation lever 204b are tilted from the neutral position by the same amount, the work vehicle 10 can be turned with a larger turning radius by operating the second operation lever 204b than by operating the first operation lever 204a. That is, the work vehicle 10 can be gently turned by the second operation lever 204b. Note that configurations of the first operation lever 204a and the second operation lever 204b are not limited to the above, and for example, a configuration may be adopted in which the work vehicle 10 can be more gently turned by the first operation lever 204a as compared with the second operation lever 204b.

The operation switch 205 includes a first operation switch 205a and a second operation switch 205b. The first operation switch 205a is disposed on a side face (an upper right side face in Fig. 2) of the housing 201, and enables a plurality of types of settings related to the automatic traveling. The plurality of types of settings include, for example, a start setting and an end setting of the automatic traveling. The first operation switch 205a is, for example, a momentary switch that can be pressed. The second operation switch 205b is disposed on a side face (an upper left side face in Fig. 2) of the housing 201, and enables on/off of driving of the work machine 12. The second operation switch 205b is, for example, a toggle switch.

The operation knob 206 is disposed on the front face of the housing 201 (on the upper side on the front face in Fig. 2), and enables adjustment of the maximum vehicle speed of the work vehicle 10. More specifically, two operation knobs 206 are provided. One of the two operation knobs 206 enables adjustment of the maximum vehicle speed of the work vehicle 10 during straight traveling. The other of the two operation knobs 206 enables adjustment of the maximum vehicle speed of the work vehicle 10 during turning traveling.

The display unit 207 is disposed on the front face (on the lower side on the front face in Fig. 2) of the housing 201, and displays various types of information to be reported to the operator. The various types of information include, for example, information related to charging of the battery 111e described later, information related to driving of the work machine 12, information related to traveling of the work vehicle 10, and the like. The display unit 207 is, for example, a liquid crystal display device, an organic EL display device, or the like.

### [Configuration related to automatic traveling of work vehicle]

A configuration related to the automatic traveling of the work vehicle 10 will be described with reference to Fig. 3. Fig. 3 is a block diagram schematically illustrating the configuration related to the automatic traveling of the work vehicle 10. In Fig. 3, components necessary for describing features (principally, the configuration related to the automatic traveling) of the work vehicle 10 according to the present embodiment are illustrated, and general components are omitted.

The work vehicle 10 includes the control device 113. For example, the control device 113 controls the automatic traveling of the work vehicle 10 in response to an instruction from the operation device 20. That is, the automatic traveling system 1 includes the control device 113 that controls the automatic traveling of the work vehicle 10.

The control device 113 is, for example, a computer device including an arithmetic device (CPU), an input/output unit, and a storage unit 113a.

The arithmetic device is, for example, a processor or a microprocessor. The storage unit 113a is a main storage device such as a read only memory (ROM) and a random access memory (RAM). The storage unit 113a may further include an auxiliary storage device such as a hard disk drive (HDD) or a solid state drive (SSD). The storage unit 113a stores various programs, data, and the like. The various programs include a control program (control program of the present invention) such as an automatic traveling program. The arithmetic device reads various programs from the storage unit 113a and performs arithmetic processing according to the programs. The programs stored in the storage unit 113a may be provided by, for example, a computer-readable non-volatile recording medium. As another example, the programs may be provided from a program providing server via a communication line such as the Internet.

The control device 113 can be operated as a generation processing unit 113b, a switching processing unit 113c, a travel processing unit 113d, a work processing unit 113e, and a notification processing unit 113f in cooperation with the above-described hardware and software. The control device 113 may include one piece of hardware or may include plural pieces of hardware capable of communicating with each other.

Note that each of the functional units 113b to 113f included in the control device 113 may be implemented by causing the arithmetic device to perform arithmetic processing according to a program as described above, that is, by software, and may be implemented by using another method. At least any one of the functional units 113b to 113f may be implemented by using, for example, an application specific integrated circuit (ASIC), a field programmable gate array (FPGA), or the like. That is, at least any one of the functional units 113b to 113f may be implemented by hardware, by using a dedicated IC or the like. Furthermore, at least any one of the functional units 113b to 113f may be implemented by using software and hardware in combination. Furthermore, each of the functional units 113b to 113f is a conceptual configuration. Therefore, functions executed by one component may be distributed to a plurality of components, or functions of a plurality of components may be integrated into one component.

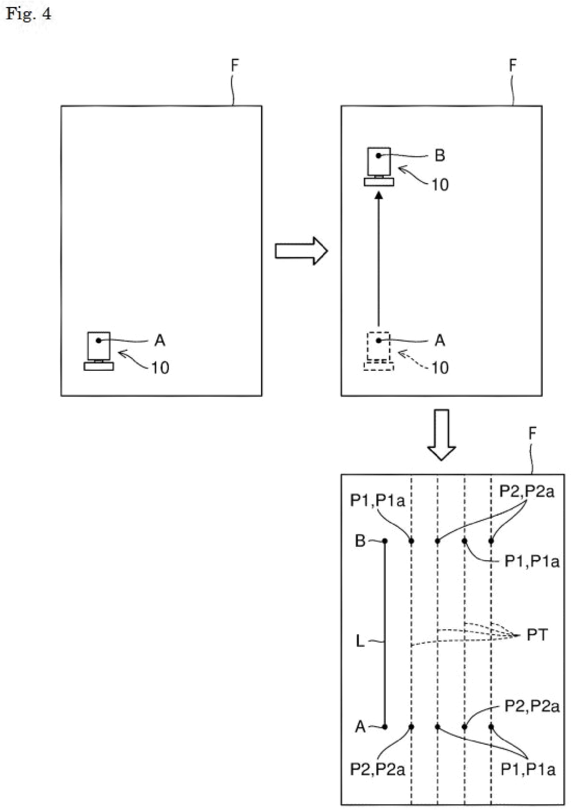

The generation processing unit 113b generates an automatic traveling route PT (target route) (see Fig. 4), described later, for the work vehicle 10 to automatically travel. A method for generating the automatic traveling route PT will be described later.

The switching processing unit 113c controls switching between the manual traveling and the automatic traveling based on a switching command from the operation device 20.

The travel processing unit 113d causes the work vehicle 10 to travel by the electric power charged in the battery 111e. Specifically, the travel processing unit 113d controls the traveling driving device 111b (see Fig. 1) by the electric power according to whether the work vehicle 10 travels manually or automatically. More specifically, during the manual traveling, the travel processing unit 113d controls the traveling driving device 111b based on a travel instruction (manual steering by the operator) from the operation device 20. During the automatic traveling, the travel processing unit 113d automatically (autonomously) controls the traveling driving device 111b such that the work vehicle 10 travels along the automatic traveling route PT. Furthermore, the travel processing unit 113d controls the traveling driving device 111b based on the remaining charge of the battery 111e to control the traveling of the work vehicle 10.

The work processing unit 113e drives the work machine 12 by the electric power charged in the battery 111e. Specifically, the work processing unit 113e adjusts an elevated/lowered position of the work machine 12 by the electric power based on an elevating/lowering instruction from the operation device 20. Furthermore, the work processing unit 113e controls the work machine driving device 111c (see Fig. 1) to control switching of power transmission to the work machine 12 based on a switching instruction from the operation device 20. Furthermore, the work processing unit 113e controls the work machine driving device 111c based on the remaining charge of the battery 111e to control the driving of the work machine 12.

The notification processing unit 113f notifies the operator of predetermined information. For example, when the remaining charge of the battery 111e decreases, the notification processing unit 113f notifies the operator of warning information described later.

A positioning unit 114, a communication unit 115, and a sensor 116 are connected to the control device 113. That is, the work vehicle 10 includes the positioning unit 114, the communication unit 115, and the sensor 116.

The positioning unit 114 is a communication device including a positioning control unit 114a, a storage unit 114b, a communication unit 114c, a positioning antenna 114d, and the like. For example, the positioning unit 114 is provided in an upper portion of the machine main body 111 (see Fig. 1). The positioning control unit 114a, the storage unit 114b, the communication unit 114c, and the positioning antenna 114d may be dispersedly disposed at different positions in the work vehicle 10. The positioning unit 114 may be substituted, for example, by a mobile phone terminal, a smartphone, a tablet terminal, a quantum compass, or the like.

The positioning control unit 114a is a computer system including one or a plurality of processors and a storage memory such as a non-volatile memory and a RAM. The storage unit 114b is non-volatile memory or the like that stores a program for causing the positioning control unit 114a to perform positioning processing, and data such as positioning information and movement information. For example, the program stored in the storage unit 114b may be provided by, for example, a computer-readable non-volatile recording medium. As another example, the programs may be provided from a program providing server via a communication line such as the Internet.

The communication unit 114c is a communication interface through which the positioning unit 114 is connected to the communication network N1 by wire or radio to perform data communication in compliance with a predetermined communication protocol with an external device such as a base station server via the communication network N1.

The positioning antenna 114d is an antenna that receives a radio wave (GNSS signal) transmitted from a satellite.

The positioning control unit 114a calculates a current position of the work vehicle 10 based on the GNSS signal accepted by the positioning antenna 114d from the satellite. For example, in a case where the work vehicle 10 automatically travels in the field F, when the positioning antenna 114d receives a radio wave (a transmission time, orbital information, or the like) transmitted from each of a plurality of satellites, the positioning control unit 114a calculates a distance between the positioning antenna 114d and each satellite, and calculates the current position (a latitude and a longitude) of the work vehicle 10 based on the calculated distance. Furthermore, the positioning control unit 114a may perform positioning by using a real-time kinematic method (RTK-GNSS positioning method (RTK method)) for calculating the current position of the work vehicle 10 using correction information associated with a base station (reference station) near the work vehicle 10. In this manner, the work vehicle 10 performs automatic traveling using the positioning information obtained by the RTK method. Note that the current position of the work vehicle 10 may be the same position as a positioning position (for example, a position of the positioning antenna 114d), or may be a position shifted from the positioning position. Note that the positioning control unit 114a may calculate (measure) the current position of the work vehicle 10 by using a quantum compass.

The communication unit 115 is a communication interface for connecting the work vehicle 10 to the communication network N1 in a wired or wireless manner and executing data communication in accordance with a predetermined communication protocol with an external device such as the operation device 20 via the communication network N1. As the communication network N1, for example, a wireless local area network (LAN), such as Wi-Fi (registered trademark), may be used.

The sensor 116 detects information related to the work vehicle 10, and outputs the detected information to the control device 113. In the present embodiment, the sensor 116 includes plural types of sensors. Each of the plural types of sensors is connected to the control device 113 to be capable of inputting a signal. Examples of the plural types of sensors include an inertial measurement unit (IMU), an obstacle sensor, a vehicle speed sensor, and an elevated/lowered position sensor.

The inertial measurement unit is a device that includes a three-axis angular velocity sensor and a three-direction acceleration sensor and can measure an orientation of the work vehicle 10. The obstacle sensor is a sensor that detects an obstacle around the work vehicle 10, and may be, for example, an ultrasonic sensor, a camera, a radar, a light detection and ranging (LiDAR), or the like. The vehicle speed sensor is a sensor that detects the vehicle speed of the work vehicle 10. The elevated/lowered position sensor is a sensor that detects an elevated/lowered position of the work machine 12 that is provided to be able to be elevated and lowered.

Here, the method for generating the automatic traveling route PT will be described with reference to Fig. 4. Fig. 4 is an explanatory view for describing the method for generating the automatic traveling route PT. The automatic traveling route PT includes a plurality of lines arranged parallel to a reference line L (particularly, see a lower right view in Fig. 4). That is, in generating the automatic traveling route PT, first, the reference line L is set.

In setting the reference line L as illustrated in an upper left view in Fig. 4, first, the work vehicle 10 is moved to an appropriate position (point A in the drawing) of a work place (in the present embodiment, a field F) by using manual traveling, and the point A is registered by using the operation device 20. More specifically, when the operator performs a predetermined operation to register the point A using the operation device 20, the generation processing unit 113b registers, as the position of the point A (first reference point), a position of the work vehicle 10 acquired by the positioning unit 114 at the time when the predetermined operation is performed.

As illustrated in an upper right view in Fig. 4, when the point A is registered, the work vehicle 10 travels straight by manual traveling and is moved to a predetermined position (point B in the drawing) according to the operation of the operation device 20 performed by the operator. When the work vehicle 10 arrives at a predetermined position, the point B is registered by using the operation device 20. More specifically, when the operator performs a predetermined operation to register the point B using the operation device 20, the generation processing unit 113b registers, as the position of the point B (second reference point), a position of the work vehicle 10 acquired by the positioning unit 114 at the time when the predetermined operation is performed.

As illustrated in the lower right view in Fig. 4, when the positions of the points A and B are registered, a straight line passing through the points A and B is set as the reference line L. When the reference line L is set, the generation processing unit 113b generates the automatic traveling route PT by arranging a plurality of lines (line segments) parallel to the reference line L at predetermined intervals.

A start point P1 and an end point P2 are set on each of the automatic traveling routes PT. The start point P1 and the end point P2 are intersections of the automatic traveling route PT and virtual lines which are orthogonal to the reference line L and pass through the point A or the point B. The start point P1 is located on a start side of automatic traveling among the intersections, and the end point P2 is located on an end side of the automatic traveling. That is, the lower right view in Fig. 4 illustrates, as an example, a case where the work vehicle 10 automatically travels from the upper side to the lower side along the leftmost automatic traveling route PT (the automatic traveling route PT adjacent to the right of the reference line L). In this case, when automatic traveling ends along the leftmost automatic traveling route PT, the operator operates the operation device 20 to turn the work vehicle 10. As a result, the front and the rear of the work vehicle 10 are reversed. After the work vehicle 10 turns, the work vehicle 10 automatically travels from the lower side to the upper side along the automatic traveling route PT adjacent to the right of the leftmost automatic traveling route PT. In a case where the work vehicle 10 has an automatic turning function of automatically turning toward the next automatic traveling route PT, the turning of the work vehicle 10 may be performed by the automatic turning function.

In the present embodiment, a position of each of the start points P1 in the field F is referred to as a start point position P1a, and a position of each of the end points P2 in the field F is referred to as an end point position P2a. That is, the automatic traveling route PT includes the start point position P1a and the end point position P2a. Therefore, the automatic traveling route PT can also be said to be a straight line connecting the start point position P1a and the end point position P2a. Note that the start point P1 and the end point P2 may be movable, for example, by a predetermined operation of the operation device 20 or the in-vehicle setting unit 111d. That is, the start point position P1a and the end point position P2a may be changeable.

The method for generating the automatic traveling route PT is not limited to the above-described generation method. Another method for generating the automatic traveling route PT will be described later.

### [Control of driving of work machine according to remaining charge]

The work processing unit 113e controls driving of the work machine 12 according to the remaining charge of the battery 111e. Specifically, the work processing unit 113e stops the driving of the work machine 12 when the remaining charge of the battery 111e becomes less than a first threshold. For example, the work processing unit 113e monitors the remaining charge of the battery 111e, and stops the driving of the work machine 12 when the remaining charge becomes, for example, less than 30% (assuming 100% in the fully charged state). For example, when the remaining charge of the battery 111e becomes less than 30%, the work processing unit 113e stops driving of the PTO power transmission unit (also simply referred to as PTO) that connects the battery 111e and the work machine 12. That is, the work processing unit 113e stops the driving of the PTO to stop work (for example, tilling work) by the work machine 12. In this manner, when the remaining charge is less than the first threshold, the work processing unit 113e stops the driving of the work machine 12 to suppress a decrease in the remaining charge. The first threshold is set to a predetermined value (30% in this case) in advance.

When the remaining charge of the battery 111e becomes less than the first threshold, the notification processing unit 113f performs notification of information indicating that the driving of the work machine 12 has been stopped (or a stop notice). Specifically, when the remaining charge of the battery 111e becomes less than the first threshold, the notification processing unit 113f causes the in-vehicle setting unit 111d (see Fig. 1), the display unit 207 (see Fig. 2) of the operation device 20, or the like to display the information indicating that the driving of the work machine 12 has been stopped (a message such as "PTO has been stopped due to decrease in remaining battery charge").

As another embodiment, the notification processing unit 113f may cause a speaker of the work vehicle 10 or the operation device 20 to output a warning sound (a buzzer sound, a voice message, or the like) or may cause the warning light 111h (see Fig. 1) to light up or blink when the remaining charge of the battery 111e becomes less than the first threshold.

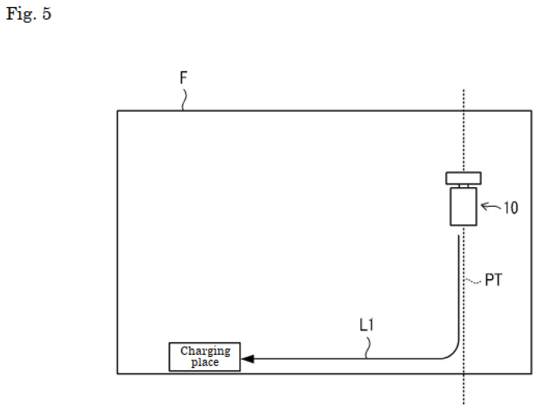

When the operator confirms the notified information, for example, the operator performs an operation of switching to the manual traveling on the operation device 20. The switching processing unit 113c switches from the automatic traveling to the manual traveling according to the operation of the operator. The travel processing unit 113d causes the work vehicle 10 to travel to a charging place (see Fig. 5) by manual steering by the operator. In this manner, when the remaining charge of the battery 111e becomes less than the first threshold, regarding the electric power (battery remaining power) of the battery 111e, the supply to the work machine driving device 111c (PTO power transmission unit) and the work machine 12 is stopped, and the supply to the traveling driving device 111b is maintained. As a result, the work vehicle 10 can travel to the charging place according to the manual steering by the operator while maintaining the state in which the driving of the work machine 12 is stopped.

As another embodiment, the travel processing unit 113d may generate an automatic traveling route from a position where the driving of the work machine 12 is stopped to the charging place, and cause the work vehicle 10 to automatically travel along the automatic traveling route. Note that the charging place (see Fig. 5) may be registered in advance in association with map information of the field F, for example, according to a setting operation of the operator.

When the work vehicle 10 arrives at the charging place, the operator performs charging work. For example, the operator charges the battery 111e by connecting a charging cable connected to a charger (generator) to a charging terminal of the battery 111e of the work vehicle 10. The work processing unit 113e stops the driving of the PTO until the remaining charge of the battery 111e becomes equal to or more than the first threshold, and permits the driving of the PTO when the remaining charge of the battery becomes equal to or more than the first threshold. That is, when the remaining charge of the battery 111e becomes equal to or more than the first threshold, the work processing unit 113e releases the stop state of the driving of the work machine 12. Note that the work processing unit 113e may permit the driving of the PTO when the charging of the battery 111e has started.

As another embodiment, the work processing unit 113e may permit the driving of the PTO when the remaining charge of the battery 111e reaches a predetermined value (for example, 70%) larger than the first threshold. In this manner, the work processing unit 113e may stop the driving of the work machine 12 when the remaining charge of the battery 111e becomes less than 30%, and may permit the driving of the work machine 12 when the remaining charge of the battery 111e becomes 70% or more. That is, the work processing unit 113e may set a threshold having hysteresis characteristics.

Furthermore, as another embodiment, in a case of a configuration in which on/off of the PTO can be set on the display unit 207 of the operation device 20, when the remaining charge of the battery 111e becomes less than the first threshold, the work processing unit 113e may stop the driving of the PTO and gray out a setting field of on/off of the PTO on the display unit 207 to prohibit an operation of turning on or off the PTO. When the operation of turning on the PTO is received from the operator when the driving of the PTO is in the stop state, the work processing unit 113e may perform notification of information indicating the stop state of the driving of the PTO.

The first threshold may be set to a fixed value (for example, 30%) as described above, or may be set to a dynamic value as described below. Here, when the remaining charge of the battery 111e decreases, it is necessary to move the work vehicle 10 to the charging place in order to charge the battery 111e. Therefore, at least electric power (the amount of charge), which enables the work vehicle 10 to move from a position (work stop position) of the work vehicle 10 when the driving of the work machine 12 is stopped to the charging place, needs to remain.

Therefore, the control device 113 may set the first threshold based on a distance from the current position of the work vehicle 10 to the charging place. For example, the control device 113 sets, as the first threshold, a minimum power amount necessary for traveling a distance obtained by adding a margin distance to a distance L1 (see Fig. 5) from the current position of the work vehicle 10 to the charging place. The control device 113 calculates the minimum power amount corresponding to the distance for each current position of the work vehicle 10 in the field F and sets the minimum power amount as the first threshold. In this manner, the control device 113 sets the minimum power amount corresponding to the current position of the work vehicle 10 as the first threshold, and determines whether the remaining charge of the battery 111e at the current position is less than the first threshold. As a result, the control device 113 sets the first threshold to a smaller value as the current position of the work vehicle 10 is closer to the charging place, and sets the first threshold to a larger value as the current position of the work vehicle 10 is farther from the charging place.

As another embodiment, the control device 113 may set the first threshold based on a length of a travel route from the current position of the work vehicle 10 to the charging place. For example, the control device 113 generates a travel route from the current position of the work vehicle 10 to the charging place, and sets, as the first threshold, a minimum power amount necessary for traveling a distance obtained by adding a margin distance to a length of the generated travel route. As a result, the control device 113 sets the first threshold to a smaller value as the travel route is shorter, and sets the first threshold to a larger value as the travel route is longer.

As another embodiment, the control device 113 may set a fixed value as the first threshold according to the size of the field F. For example, the control device 113 identifies a position farthest from the charging place in the field F or a position where a travel route to the charging place is the longest, and sets, as the first threshold, a minimum power amount necessary for traveling a distance obtained by adding a margin distance to a distance from the identified position to the charging place. Since the first threshold is set in this manner, the work vehicle 10 can travel to the charging place regardless of the position where the driving of the work machine 12 is stopped in the field F.

As another embodiment, the control device 113 may set the first threshold according to the type of the work machine 12. For example, depending on the type, the work machine 12 has different weights and has different loads on the work vehicle 10. Therefore, power consumption of the battery 111e changes depending on the type of the work machine 12. Therefore, the control device 113 sets the first threshold to a smaller value as the weight of the work machine 12 decreases, and sets the first threshold to a larger value as the weight of the work machine 12 increases. Note that a threshold set according to the weight of the work machine 12 may be dynamically changed based on a distance from the current position of the work vehicle 10 to the charging place or a length of a travel route.

As another embodiment, the control device 113 may set the first threshold in accordance with a setting operation of the operator. Specifically, when the operator inputs any ratio (%) on the display unit 207 (see Fig. 2) of the operation device 20, the control device 113 sets the input ratio as the first threshold. Note that the control device 113 may set in advance a lower limit value (for example, "10%") that can be input by the operator, permit input of a ratio equal to or more than the lower limit value, and prohibit input of a ratio less than the lower limit value. Furthermore, the control device 113 may set the lower limit value in accordance with the work machine 12.

In each of the above configurations, the notification processing unit 113f may perform notification of warning information regarding the remaining charge when the remaining charge of the battery 111e becomes less than a second threshold larger than the first threshold. For example, when the remaining charge of the battery 111e becomes less than 50% (the second threshold), the notification processing unit 113f may cause the display unit to display a message indicating a decrease in the remaining charge, may cause the speaker to output a warning sound (a buzzer sound, a voice message, or the like), or may cause the warning light 111h (see Fig. 1) to light up or blink. Furthermore, the notification processing unit 113f may perform notification of a time until the remaining charge reaches the first threshold (a time during which the work vehicle 10 can travel and work from when the remaining charge becomes less than the second threshold to when the remaining charge reaches the first threshold) when the remaining charge of the battery 111e becomes less than the second threshold. As a result, the operator can grasp that the remaining battery charge has decreased, how much more work is possible, and the like.

Note that the second threshold may be settable by the operator. The control device 113 sets the second threshold according to an operation of the operator. Furthermore, the notification processing unit 113f may perform notification of warning information having content corresponding to the second threshold. For example, the notification processing unit 113f displays a message of "remaining battery charge reaches 50%" when the remaining charge of the battery 111e becomes less than 50% in a case where the second threshold is 50%, and displays a message of "remaining battery charge is little, so please charge battery" when the remaining charge of the battery 111e becomes less than 30% in a case where the second threshold is 30%. The operator may be able to register in advance the content of the warning information according to the second threshold.

When the remaining charge of the battery 111e becomes less than the first threshold, the notification processing unit 113f may perform notification of a travel distance and a travel time for which the work vehicle 10 can travel from that time.

### [Traveling control according to remaining charge]

The travel processing unit 113d controls traveling of the work vehicle 10 according to the remaining charge of the battery 111e. Furthermore, the travel processing unit 113d controls the traveling of the work vehicle 10 in accordance with the work machine 12.

Specifically, when the remaining charge of the battery 111e becomes less than the first threshold and driving of the work machine 12 is stopped, the travel processing unit 113d stops the traveling of the work vehicle 10. For example, the travel processing unit 113d temporarily stops the traveling of the work vehicle 10 when a predetermined time (for example, 5 minutes) has elapsed after the stop of the driving of the work machine 12. That is, the travel processing unit 113d permits the traveling of the work vehicle 10 until the predetermined time elapses after the driving of the work machine 12 is stopped, and temporarily stops the traveling of the work vehicle 10 when the predetermined time has elapsed.

Here, as the work machine 12, there are a work machine (for example, a rotary tilling device, a grass cutting device, or the like) that breaks down or damages the field F if traveling is performed in a state where driving of the work machine is stopped and a work machine (for example, a spraying device) that does not break down or damage the field F even if traveling is performed in a state where the driving of the work machine is stopped. For example, since the rotary tilling device performs work in a state of being in contact with the soil of the field F, if the driving is stopped in the state of being in contact with the soil, the rotary tilling device may break down or damage the field F when the work vehicle 10 travels thereafter. On the other hand, since the spraying device performs work in a state of being fixed at a position above the soil, the spraying device does not break down or damage the field F even if the work vehicle 10 travels in a state where the driving is stopped.

Therefore, when the remaining charge of the battery 111e becomes less than the first threshold and the driving of the work machine 12 is stopped, the travel processing unit 113d may determine whether to execute processing of stopping the work vehicle 10 after the lapse of the predetermined time according to the type of the work machine 12.

For example, in the case of the work machine 12 (for example, the rotary tilling device) that performs work in the state of being in contact with the soil of the field F, the travel processing unit 113d executes the above-described processing when the remaining charge of the battery 111e becomes less than the first threshold and the driving of the work machine 12 is stopped. That is, the travel processing unit 113d permits the traveling of the work vehicle 10 for the predetermined time, and temporarily stops the traveling of the work vehicle 10 at the time when the predetermined time has elapsed.

On the other hand, for example, in the case of the work machine 12 (for example, the spraying device) that performs work without being in contact with the soil of the field F, the travel processing unit 113d does not execute the above-described processing when the remaining charge of the battery 111e becomes less than the first threshold and the driving of the work machine 12 is stopped. That is, the travel processing unit 113d permits the traveling until the work vehicle 10 arrives at the charging place.

In this manner, the travel processing unit 113d stops the traveling of the work vehicle 10 when the predetermined time has elapsed in the stop state of the work machine 12 in a case where the work machine 12 is a first work machine (for example, the rotary tilling device), and permits the traveling of the work vehicle 10 in a case where the work machine 12 is a second work machine (for example, the spraying device).

As another embodiment, in the work machine 12 that performs work in the state of being in contact with the soil of the field F, the travel processing unit 113d may permit the traveling without executing the above-described processing when the work machine 12 has been moved (elevated) to a non-work position where the work machine 12 is not in contact with the soil. In this case, the work processing unit 113e moves the work machine 12 to the non-work position before stopping the driving of the work machine 12.

When the predetermined time elapses and the work vehicle 10 is temporarily stopped, for example, the operator performs an operation to move the work machine 12 to the non-work position. For example, when the work machine 12 is the rotary tilling device, the operator operates an operation unit of the work vehicle 10 or an operation unit of the operation device 20 to elevate the work machine 12 to a non-work height. After moving the work machine 12 to the non-work position, the operator restarts traveling of the work vehicle 10. When a traveling restart instruction is acquired from the operator, the travel processing unit 113d permits the traveling of the work vehicle 10 and restarts the traveling toward the charging place.

The notification processing unit 113f may perform notification of information indicating that the traveling of the work vehicle 10 is to be stopped when the predetermined time has elapsed. When the predetermined time has elapsed, the notification processing unit 113f may notify the operator of information prompting the operator to move the work machine 12 to the non-work position and issue the traveling restart instruction. Furthermore, the notification processing unit 113f may display information (for example, countdown information of remaining time) corresponding to remaining time of the predetermined time on the display unit 207 (see Fig. 2) of the operation device 20.

### [Travel processing]

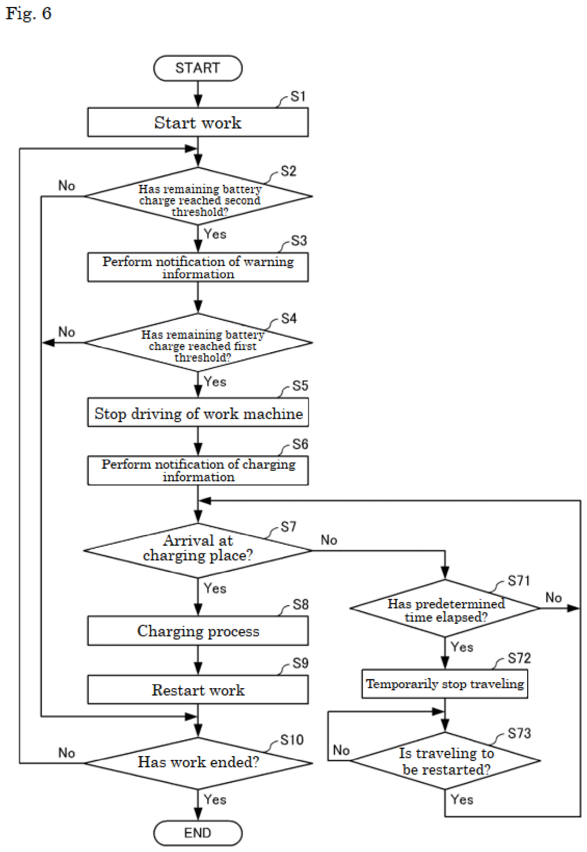

Hereinafter, an example of travel processing executed by the automatic traveling system 1 will be described with reference to Fig. 6.

Note that the present invention can be considered as an invention of a traveling method to perform one or more steps included in the travel processing. Furthermore, the one or more steps included in the travel processing described here may be omitted as appropriate. Note that steps in the travel processing may be executed in a different order as long as similar operation and effect are achieved. Furthermore, here, a case where the control device 113 of the work vehicle 10 executes each step in the travel processing will be described as an example, but a traveling method may also be executed in which one or a plurality of processors execute the respective steps in the travel processing in a distributed manner. Note that a control method of the present invention is included in the traveling method.

### <Step S1>

In Step S1, the control device 113 causes the work vehicle 10 to start work. Specifically, when the automatic traveling route PT (see Fig. 4) is generated, the control device 113 causes the work vehicle 10 to start automatic traveling along the automatic traveling route PT, and drives the work machine 12 to start work (for example, tilling work). For example, when the work vehicle 10 satisfies a start condition of the automatic traveling and acquires a work start instruction from the operator, the control device 113 starts the automatic traveling and the work. The control device 113 causes the work machine 12 to execute the work while causing the work vehicle 10 to travel forward and backward along a plurality of the automatic traveling routes PT. Note that the control device 113 may cause manual traveling between the automatic traveling routes PT in accordance with manual steering by the operator.

### <Step S2>

In Step S2, the control device 113 determines whether the remaining charge of the battery 111e has reached a second threshold (for example, 50%). When the remaining charge of the battery 111e has decreased and reached the second threshold (S2: Yes), the control device 113 shifts the processing to Step S3. When the remaining charge of the battery 111e has not reached the second threshold (S2: No), the control device 113 shifts the processing to Step S10.

### <Step S3>

In Step S3, the control device 113 performs notification of warning information. For example, the control device 113 displays a message indicating that the remaining charge of the battery 111e has decreased (for example, a message of "remaining battery charge has reached 50%") on the display unit 207 (see Fig. 2) of the operation device 20, the display unit of the in-vehicle setting unit 111d (see Fig. 1), or the like. As another embodiment, the control device 113 may output a warning sound (a buzzer sound, a voice message, or the like) from the speaker mounted on the operation device 20, the work vehicle 10, or the like, or may cause the warning light 111h to light up or blink (see Fig. 1). In this manner, the control device 113 notifies the operator that the remaining charge of the battery 111e has decreased. While the remaining charge of the battery 111e is below the second threshold, the control device 113 may perform notification of the warning information at all times or may perform notification of the warning information at a predetermined cycle. Furthermore, the control device 113 may notify the operator of the time and distance for which traveling is possible with the current remaining charge.

### <Step S4>

In Step S4, the control device 113 determines whether the remaining charge of the battery 111e has reached a first threshold (for example, 30%). When the remaining charge of the battery 111e has further decreased to reach the first threshold (S4: Yes), the control device 113 shifts the processing to Step S5. When the remaining charge of the battery 111e has not reached the first threshold (S4: No), the control device 113 shifts the processing to Step S10.

### <Step S5>

In Step S5, the control device 113 stops the driving of the work machine 12. Specifically, the control device 113 stops driving of the PTO to stop the work (tilling work) by the work machine 12.

### <Step S6>

In Step S6, the control device 113 performs notification of charging information. For example, the control device 113 displays a message prompting charging of the battery 111e on the display unit 207 (see Fig. 2) of the operation device 20, the display unit of the in-vehicle setting unit 111d (see Fig. 1), or the like. As another embodiment, the control device 113 may output a warning sound (a buzzer sound, a voice message, or the like) from the speaker mounted on the operation device 20, the work vehicle 10, or the like, or may cause the warning light 111h to light up or blink (see Fig. 1). In this manner, the control device 113 notifies the operator that the battery 111e needs to be charged. Note that the control device 113 always performs notification of the charging information while the remaining charge of the battery 111e is below the first threshold. Furthermore, the control device 113 may notify the operator of the time and distance for which traveling is possible with the current remaining charge.

When confirming the charging information, the operator switches to manual traveling and moves the work vehicle 10 to the charging place (see Fig. 5). As another embodiment, the control device 113 may generate an automatic traveling route from the current position (work stop position) of the work vehicle 10 to the charging place, and cause the work vehicle 10 to automatically travel to the charging place along the automatic traveling route.

### <Step S7>

In Step S7, the control device 113 determines whether the work vehicle 10 has arrived at the charging place. When it is determined that the work vehicle 10 has arrived at the charging place (S7: Yes), the control device 113 shifts the processing to Step S8. On the other hand, when it is determined that the work vehicle 10 has not arrived at the charging place (S7: No), the control device 113 shifts the processing to Step S71.

### <Step S71>

In Step S71, the control device 113 determines whether a predetermined time (for example, 5 minutes) has elapsed since the stop of the driving of the work machine 12. When the predetermined time has elapsed since the stop of the driving of the work machine 12 (S71: Yes), the control device 113 shifts the processing to Step S72. When the predetermined time has not elapsed since the stop of the driving of the work machine 12 (S71: No), the control device 113 returns the processing to Step S7.

### <Step S72>

In Step S72, the control device 113 temporarily stops the traveling of the work vehicle 10. Note that the control device 113 temporarily stops the traveling of the work vehicle 10 regardless of the manual traveling or the automatic traveling. Furthermore, when the traveling of the work vehicle 10 is temporarily stopped, the control device 113 may notify the operator of a message prompting the work machine 12 to move to the non-work position.

### <Step S73>

In Step S73, the control device 113 determines whether the traveling restart instruction for the work vehicle 10 has been acquired from the operator. For example, when confirming the above-described message, the operator moves the work machine 12 to the non-work position and issues the traveling restart instruction. When the traveling restart instruction for the work vehicle 10 is acquired from the operator (S73: Yes), the control device 113 shifts the processing to Step S7. The control device 113 continues the determination processing in Step S73 until the traveling restart instruction for the work vehicle 10 is acquired from the operator (S73: No).

In this manner, when the work vehicle 10 does not arrive at the charging place within the predetermined time after the stop of the driving of the work machine 12, the control device 113 notifies the operator to temporarily stop the traveling and move the work machine 12 to the non-work position. As a result, it is possible to prevent a failure of the work machine 12 caused by being dragged along the ground in the stop state, damage to the field, and the like.

Note that the failure of the work machine 12, the damage to the field, and the like do not occur in a case where the work machine 12 is a work machine (for example, a spraying device) that performs work without being in contact with the soil of the field F, so that the processing of temporarily stopping the traveling (Steps S71 to S73) may be omitted.

Furthermore, even in a case where the work machine 12 is a work machine that performs work in the state of being in contact with the soil of the field F, when the work machine 12 is moved to the non-work position (elevated to the non-work height) in Step S5, the processing of temporarily stopping the traveling (Steps S71 to S73) may be omitted.

### <Step S8>

In Step S8, the control device 113 executes processing of charging the battery 111e. For example, at the charging place, the operator connects a charging cable connected to a charger (generator) to the charging terminal of the battery 111e of the work vehicle 10. As a result, the control device 113 starts charging the battery 111e, and ends the charging processing when the amount of charge reaches a specified value (for example, 100%). Note that the control device 113 may permit the driving of the work machine 12 in a case where the amount of charge becomes a predetermined value (for example, 70%) or more.

### <Step S9>

In Step S9, the control device 113 causes the work vehicle 10 to restart the work. For example, when the operator manually travels the work vehicle 10 to the work stop position by manual steering, the control device 113 restarts the automatic traveling and the work along the automatic traveling route PT from the work stop position. As another embodiment, the control device 113 may cause automatic traveling to be performed along an automatic traveling route from the charging place to the work stop position and restart the automatic traveling and the work along the automatic traveling route PT from the work stop position.

### <Step S10>

In Step S10, the control device 113 determines whether the work of the work vehicle 10 has ended. When the work ends (S10: Yes), the control device 113 ends the traveling processing. When the work has not ended (S10: No), the control device 113 shifts the processing to Step S2. For example, when the operator has performed an operation to end the work, the control device 113 determines that the work has ended. As another embodiment, the control device 113 may determine that the work has ended when the work vehicle 10 has arrived at a preset work end position.

The control device 113 repeats the processing from Steps S2 to S9 until the work by the work vehicle 10 ends.

As described above, the control device 113 according to the present embodiment is a control device that drives the work vehicle 10 by the electric power supplied from the battery 111e (power supply source). Furthermore, the control device 113 causes the work vehicle 10 to travel and drives the work machine 12 provided in the work vehicle 10 by the electric power charged in the battery 111e. Furthermore, the control device 113 stops the driving of the work machine 12 when the remaining charge of the battery 111e becomes less than the first threshold.

According to the above configuration, since a decrease in the amount of charge of the battery 111e can be suppressed, the occurrence of charge run-out can be prevented. Furthermore, after the driving of the work machine 12 is stopped, the work vehicle 10 can be caused to travel to the charging place by the remaining charge of the battery 111e to perform the charging work. As a result, for example, it is possible to prevent the work vehicle 10 from running out of charge in the middle of a work route. Therefore, it is possible to prevent a decrease in work efficiency.

### [Other embodiments]

The automatic traveling route PT illustrated in Fig. 4 is generated based on the reference line L passing through two reference points (point A and point B) each of which is any position in the field F set according to an operation of the operator. As another method for generating the automatic traveling route PT, the generation processing unit 113b may generate the automatic traveling route PT based on the reference line L that passes through a reference point (point A), set at a position (for example, a current position) of the work vehicle 10 in the field F, and extends in a direction of an azimuth (vehicle azimuth) of the work vehicle 10. As another generation method, the generation processing unit 113b may generate the automatic traveling route PT based on the reference line L that passes through a reference point (point A), set at a position (for example, a current position) of the work vehicle 10 in the field F, and extends in a direction of a set azimuth angle (set angle) set according to an operation of the operator. As another generation method, the generation processing unit 113b may set an outer edge selected by the operator among the outer edges of the field F as the reference line L, and generate the automatic traveling route PT based on this reference line L. Furthermore, the operator may be able to select one of the generation methods in the operation device 20.

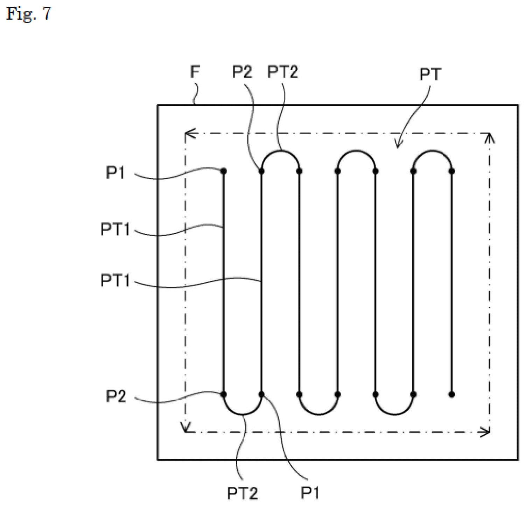

Furthermore, the automatic traveling route PT may be a route illustrated in Fig. 7. Hereinafter, an example of a method for generating the automatic traveling route PT illustrated in Fig. 7 will be described.

First, the field F is registered. When the field F is registered, for example, the operator causes the work vehicle 10 to travel along the outer periphery of the field F such as near a levee edge by manual traveling (see one-dot chain line in Fig. 7). During the traveling along the outer periphery of the field F, the shape of the field F is identified by a traveling locus of the work vehicle 10 obtained by the positioning unit 114. The identified shape of the field F is stored in, for example, the storage unit 113a (see Fig. 3), whereby the field F is registered.

When the field F is registered, the inside of the shape of the field F is set as an automatic traveling area. When the automatic traveling area is set, the generation processing unit 113b generates the automatic traveling route PT in the automatic traveling area. The automatic traveling route PT includes a plurality of straight routes PT1. Each of the straight routes PT1 linearly extends such that the work vehicle 10 travels straight. An end point P2 on one side and a start point P1 on the other side of the adjacent straight routes PT1 among the plurality of straight routes PT1 are connected via a turning route PT2. That is, the straight route PT1 and the turning route PT2 are alternately connected in the automatic traveling route PT. The turning route PT2 extends in a curved shape such that the work vehicle 10 performs turning traveling.

According to the automatic traveling route PT, the work vehicle 10 can travel straight along the straight route PT1 by automatic traveling and can automatically turn along the turning route PT2. That is, the method for generating the automatic traveling route PT according to the present embodiment is suitable for an automatic traveling method of the work vehicle 10 including automatic turning (the work vehicle 10 having an automatic turning function).

### [Additional note of invention]

Hereinafter, an outline of the invention extracted from each of the above-described embodiments will be additionally described. Note that configurations and processing functions described in the following additional notes can be selected to be combined as desired.

### <Additional Note 1>

A control method for driving a work vehicle by electric power supplied from a power supply source, the control method including:
causing the work vehicle to travel by the electric power charged in the power supply source;
driving a work machine provided in the work vehicle by the electric power charged in the power supply source; and
stopping the driving of the work machine when a remaining charge of the power supply source becomes less than a first threshold.

### <Additional Note 2>

The control method according to Additional note 1, further including
performing notification of information indicating that the driving of the work machine is stopped when the remaining charge of the power supply source becomes less than the first threshold.

### <Additional Note 3>

The control method according to Additional note 1 or 2, further including
stopping driving of a PTO connecting the power supply source and the work machine when the remaining charge of the power supply source becomes less than the first threshold.

### <Additional Note 4>

The control method according to Additional note 3, wherein
the driving of the PTO is stopped until the remaining charge of the power supply source becomes equal to or more than the first threshold or equal to or more than a predetermined value that is larger than the first threshold.

### <Additional Note 5>

The control method according to any one of Additional notes 1 to 4, wherein
the first threshold is set according to an operation of a user.

### <Additional Note 6>

The control method according to any one of Additional notes 1 to 5, wherein
the first threshold is set based on at least one of a type of the work machine and a distance between a charging place of the power supply source and a current position of the work vehicle.

<Additional Note 7>

The control method according to Additional note 5 or 6, wherein
a lower limit value is set for the first threshold, and
the first threshold is set to a value equal to or more than the lower limit value.

### <Additional Note 8>

The control method according to any one of Additional notes 1 to 7, further including
stopping the traveling of the work vehicle when a predetermined time has elapsed in a stop state of the work machine since the driving of the work machine is stopped.

### <Additional Note 9>

The control method according to Additional note 8, wherein
the traveling of the work vehicle is stopped when the predetermined time has elapsed in the stop state of the work machine in a case where the work machine is a first work machine, and
the traveling of the work vehicle is permitted regardless of a time in the stop state of the work machine in a case where the work machine is a second work machine.

### <Additional Note 10>

The control method according to any one of Additional notes 1 to 9, further including
moving the work machine to a non-work position before the stopping the driving of the work machine.

### <Additional Note 11>

The control method according to any one of Additional notes 1 to 10, further including
performing notification of warning information related to the remaining charge when the remaining charge becomes less than a second threshold that is larger than the first threshold.

<Additional Note 12>

The control method according to Additional note 11, wherein
the second threshold is set according to an operation of a user.

### <Additional Note 13>

The control method according to Additional note 11 or 12, wherein
the warning information having content corresponding to the second threshold is notified.

### <Additional Note 14>

A control program for driving a work vehicle by electric power supplied from a power supply source, the control program for causing one or a plurality of processors to execute:
causing the work vehicle to travel by the electric power charged in the power supply source;
driving a work machine provided in the work vehicle by the electric power charged in the power supply source; and
stopping the driving of the work machine when a remaining charge of the power supply source becomes less than a first threshold.

### <Additional Note 15>

A control device that drives a work vehicle by electric power supplied from a power supply source, the control device including:
a travel processing unit that causes the work vehicle to travel by the electric power charged in the power supply source; and
a work processing unit that drives a work machine, provided in the work vehicle, by the electric power charged in the power supply source, and stops the driving of the work machine when a remaining charge of the power supply source becomes less than a first threshold.

### LIST OF REFERENCE SIGNS

- 1: Automatic traveling system
- 10: Work vehicle
- 11: Traveling machine body
- 12: Work machine
- 111b: Traveling driving device
- 111c: Work machine driving device
- 111d: In-vehicle setting unit
- 111e: Battery (power supply source)
- 111h: Warning light
- 112: Traveling unit
- 113: Control device
- 113a: Storage unit
- 113b: Generation processing unit
- 113c: Switching processing unit
- 113d: Travel processing unit
- 113e: Work processing unit
- 113f: Notification processing unit
- 114: Positioning unit
- 115: Communication unit
- 116: Sensor
- 20: Operation device
- 207: Display unit
- F: Field
- PT: Automatic traveling route (target route)

## Claims

1. A control method for driving a work vehicle by electric power supplied from a power supply source, the control method comprising:
causing the work vehicle to travel by the electric power charged in the power supply source;
driving a work machine provided in the work vehicle by the electric power charged in the power supply source; and
stopping the driving of the work machine when a remaining charge of the power supply source becomes less than a first threshold.

2. The control method according to claim 1, further comprising
performing notification of information indicating that the driving of the work machine is stopped when the remaining charge of the power supply source becomes less than the first threshold.

3. The control method according to claim 1, further comprising
stopping driving of a PTO connecting the power supply source and the work machine when the remaining charge of the power supply source becomes less than the first threshold.

4. The control method according to claim 3, wherein
the driving of the PTO is stopped until the remaining charge of the power supply source becomes equal to or more than the first threshold or equal to or more than a predetermined value that is larger than the first threshold.

5. The control method according to claim 1, wherein
the first threshold is set according to an operation of a user.

6. The control method according to claim 1, wherein
the first threshold is set based on at least one of a type of the work machine and a distance between a charging place of the power supply source and a current position of the work vehicle.

7. The control method according to claim 5 or 6, wherein
a lower limit value is set for the first threshold, and
the first threshold is set to a value equal to or more than the lower limit value.

8. The control method according to claim 1, further comprising
stopping the traveling of the work vehicle when a predetermined time has elapsed in a stop state of the work machine since the driving of the work machine is stopped.

9. The control method according to claim 8, wherein
the traveling of the work vehicle is stopped when the predetermined time has elapsed in the stop state of the work machine in a case where the work machine is a first work machine, and
the traveling of the work vehicle is permitted regardless of a time in the stop state of the work machine in a case where the work machine is a second work machine.

10. The control method according to claim 1, further comprising
moving the work machine to a non-work position before the stopping the driving of the work machine.

11. The control method according to claim 1, further comprising
performing notification of warning information related to the remaining charge when the remaining charge becomes less than a second threshold that is larger than the first threshold.

12. The control method according to claim 11, wherein
the second threshold is set according to an operation of a user.

13. The control method according to claim 11, wherein
the warning information having content corresponding to the second threshold is notified.

14. A control program for driving a work vehicle by electric power supplied from a power supply source, the control program for causing one or a plurality of processors to execute:
causing the work vehicle to travel by the electric power charged in the power supply source;
driving a work machine provided in the work vehicle by the electric power charged in the power supply source; and
stopping the driving of the work machine when a remaining charge of the power supply source becomes less than a first threshold.

15. A control device that drives a work vehicle by electric power supplied from a power supply source, the control device comprising:
a travel processing unit that causes the work vehicle to travel by the electric power charged in the power supply source; and
a work processing unit that drives a work machine, provided in the work vehicle, by the electric power charged in the power supply source, and stops the driving of the work machine when a remaining charge of the power supply source becomes less than a first threshold.
